**Europäisches Patentamt**

(19) **European Patent Office**

**Office européen des brevets**

(11) Veröffentlichungsnummer: **0 062 783**
**B1**

(12) **EUROPÄISCHE PATENTSCHRIFT**

(45) Veröffentlichungstag der Patentschrift:
12.09.84

(51) Int. Cl.³: **H 04 N 9/491,** H 04 N 5/76

(21) Anmeldenummer: **82102307.4**

(22) Anmeldetag: **20.03.82**

(54) Videorecorder mit Verarbeitung von ein oder mehreren modulierten Tonträgern.

(30) Priorität: **06.04.81 DE 3113799**

(43) Veröffentlichungstag der Anmeldung:
**20.10.82 Patentblatt 82/42**

(45) Bekanntmachung des Hinweises auf die Patenterteilung:
**12.09.84 Patentblatt 84/37**

(84) Benannte Vertragsstaaten:
**BE DE FR GB IT SE**

(56) Entgegenhaltungen:
**DE - A - 2 250 051**
**US - A - 4 272 788**

**FUNK-TECHNIK, 34. Jahrgang, Nr. 8/1979, München ALTMANN "Vorschläge für die Kennung von Fernseh-Programmen" Seiten T 383 - T 385**
**FUNKSCHAU, 17/1981, 21. August 1981, München DAMBACHER, SINGERL "Aufwertung, Zweitonverfahren für das Fernsehen" Seiten 73-77**

(73) Patentinhaber: **Licentia Patent-Verwaltungs-GmbH, Theodor-Stern-Kai 1, D-6000 Frankfurt/Main 70 (DE)**

(72) Erfinder: **Kluth, Hans-Jürgen, Ing. grad., Gartenstrasse 14, D-3008 Garbsen 8 (DE)**
Erfinder: **Schröder, Ernst, F., Dipl.-Ing., Pinkenburger Strasse 25D, D-3000 Hannover 51 (DE)**

(74) Vertreter: **Einsel, Robert, Dipl.-Ing., Theodor-Stern-Kai 1, D-6000 Frankfurt/Main 70 (DE)**

## Beschreibung

Die Erfindung betrifft einen Videorecorder nach dem Oberbegriff des Anspruchs 1. Ein Videorecorder ist bekanntlich ein Gerät zum Aufzeichnen und/oder Wiedergeben von Video- und Tonsignalen auf bzw. von Bändern. Bei den heute weit verbreiteten Videorecordern, z.B. VHS, Betaformat und V 2000, werden die Videosignale als Frequenzmodulation eines Bildträgers in Schrägspuren mittels rotierender Köpfe und die Tonsignale direkt mittels feststehender Köpfe in einer parallel zur Bandkante verlaufenden Spur aufgezeichnet. Für die Tonwiedergabe in Fernsehempfängern strahlen Fernsehsender Signale ab, die ein oder mehrere Tonträger für die Übertragung von stereophonen oder mehrsprachigen Signalen besitzen und ausserdem einen zusätzlichen, den Tonsignalen zugeordneten Pilotträger von etwa 55 kHz. Dieser Pilotträger enthält als Amplitudenmodulation die Information, ob beide Tonträger mono übertragen, ob die beiden Tonträger stereophon oder mehrsprachig sind. Dieser Pilotträger kann mit den zur Zeit üblichen Videorecordern nicht aufgezeichnet werden, weil deren Tonspur nur eine Bandbreite von 12 kHz hat.

Der Erfindung liegt die Aufgabe zugrunde, einen Videorecorder zu schaffen, mit dem stereophone Signale unter Ausnutzung eines Pilotträgers aufgezeichnet und wiedergegeben werden können. Die Erfindung besteht in der Anwendung der im Anspruch 1 gekennzeichneten Merkmale. Weiterbildungen sind in den Unteransprüchen gekennzeichnet.

Die Erfindung besteht also im wesentlichen darin, die Zuordnung aller die Tonaufzeichnung betreffenden Träger zu parallelen Tonspuren aufzugeben und wenigstens den Pilotträger zusammen mit den Videosignalen aufzuzeichnen. Die Erfindung hat den Vorteil, dass der Pilotträger aufgezeichnet werden kann und seine Bandbreite so schmal ist, dass im Videokanal überhaupt keine sperrenden Filter für ihn vorgesehen werden müssen.

Zur näheren Erläuterung der Erfindung wird im folgenden ein Ausführungsbeispiel anhand der Zeichnung beschrieben. Diese zeigt in

Fig. 1 die Modulationsspektren der Luminanz- und Chrominanzsignale,

Fig. 2 die Luminanzspektren und Chrominanzspektren in Originallage,

Fig. 3 eine Schaltung zur Aufzeichnung der Signale,

Fig. 4 eine Schaltung zur Wiedergabe der Signale.

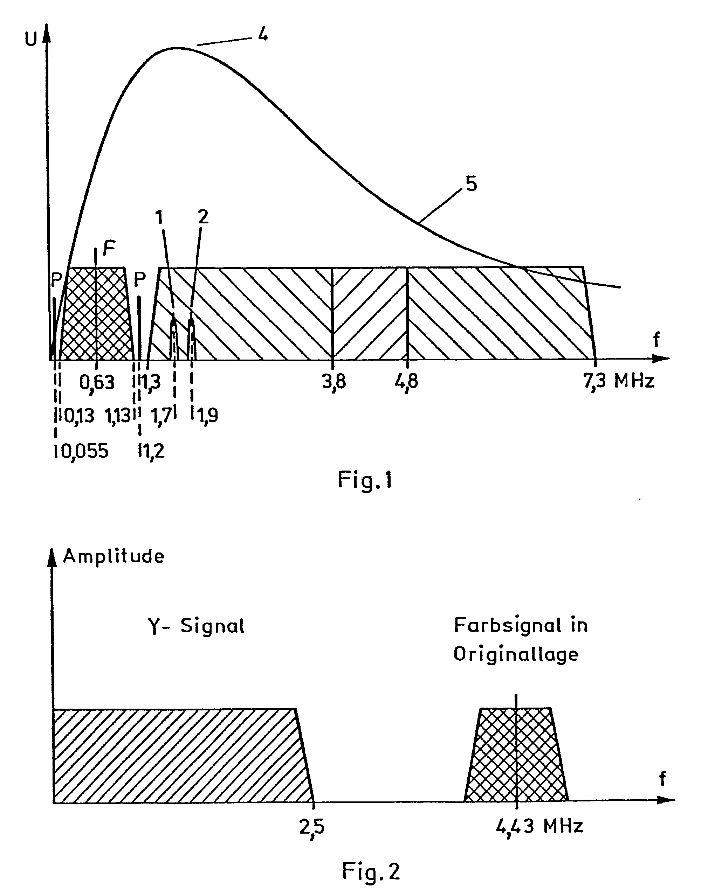

In Fig. 1 ist das Frequenzspektrum des frequenzmodulierten Bildträgers und des modulierten Farbträgers F dargestellt.

Der unmodulierte Bildträger liegt bei 3,8 MHz, der Farbträger bei 0,63 MHz. Die statische Modulationskennlinie des frequenzmodulierten Bildträgers erstreckt sich von 3,8-4,8 MHz, wobei 3,8 MHz dem Ultraschwarzwert und 4,8 MHz dem Weisswert des Videosignals entspricht. Die gesamte Breite des FM-Signals reicht von 1,3-7,3 MHz, wobei die Empfindlichkeit des oder der Köpfe ihr Maximum im Bereich der niederen Frequenzen des Bandes haben. Innerhalb dieses Luminanz-Frequenzspektrums sind zwei mit je einem NF-Tonsignal modulierte Tonträger 1 und 2 vorgesehen. Die Frequenzen dieser Tonträger 1, 2 liegen etwa beim Maximum 4 der Kopf-Band-Frequenzgangkennlinie 5, die bei der Aufzeichnung in den Schrägspuren wirksam ist. Es ist aber auch möglich, die Tonsignale direkt durch einen feststehenden Kopf in einer parallel zur Bandkante verlaufenden Spur aufzuzeichnen. Um dem aufgezeichneten Signal bei der Wiedergabe entnehmen zu können, ob es sich bei den Ton-NF-Signalen um Mono-, Stereo- oder Mehrsprachensignale handelt, ist in das Gesamtspektrum noch ein Pilotträger P eingeschachtelt, dessen Modulation eine Angabe über die Art der NF-Signale enthält. So bedeutet der unmodulierte Pilotträger, dass Monosignale übertragen werden, während eine Modulation von 117,5 Hz Stereowiedergabe und 274,1 Hz Zweisprachenton bedeuten. Der Pilotträger ist gemäss Fig. 1 entweder auf 55 kHz oder auf 1,2 MHz justiert. Seine Frequenz kann aber auch entsprechend den jeweiligen Anforderungen anders gewählt werden, wenn die Frequenz nur geeignet ist, den Pilotträger zusammen mit den Videosignalen aufzuzeichnen.

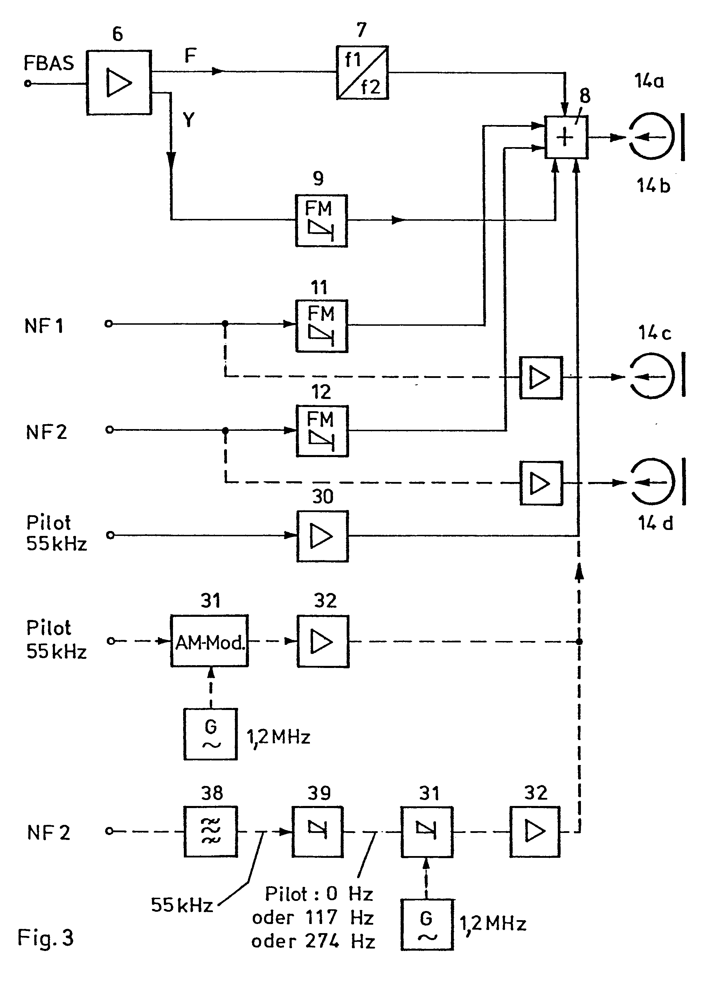

In Fig. 3 wird das FBAS-Signal in der Schaltung 6 durch frequenzselektive Mittel in den modulierten Farbträger F und das Leuchtdichtesignal Y getrennt. Der modulierte PAL-Farbträger F wird in dem Frequenzumsetzer 7 von seiner Originalfrequenz 4,43 MHz auf die Frequenz 0,63 MHz umgesetzt und der Addierstufe 8 zugeführt. Das Leuchtdichtesignal Y wird in dem Frequenzmodulator 9 einem Bildträger aufmoduliert, wodurch ein Frequenzspektrum von 1,3 bis 7,3 MHz gemäss Fig. 1 entsteht. Zwei Tonsignale NF1 und NF2 werden in zwei Frequenzmodulatoren 11, 12 zwei Trägern mit der Frequenz von 1,7 und 1,9 MHz aufmoduliert, die ebenfalls der Addierstufe 8 zugeführt werden. Bei einem zu übertragenden NF-Frequenzband von 15 kHz wird ein FM-Hub von $\pm$ 50 kHz gewählt, wodurch sich Modulationsbandbreiten von 1,7 bzw. 1,9 MHz $\pm$ 65 kHz ergeben. Das Ausgangssignal der Addierstufe 8 enthält die in Fig. 1 dargestellten Signale und wird dem Magnetkopf 14 zur Aufzeichnung auf einem Magnetband zugeführt. Der Addierstufe 8 wird ausserdem direkt oder über einen Verstärker 30 ein amplitudenmodulierter Pilotträger zugeführt. Die Frequenz ist mit 55 kHz gewählt, liegt also unterhalb aller aufgezeichneten oder aufzuzeichnenden Videosignalfrequenzen. Diese Frequenz hat den Vorteil, dass die für die Senderabstrahlung vorgesehene Pilotträgerfrequenz direkt verwendet werden kann.

Eine Abwandlung ist in Fig. 3 gestrichelt eingezeichnet. Bei der Abwandlung wird der modulierte Pilotträger in einer Mischstufe 31, z.B. einem Amplitudenmodulator oder FM-Modulator vom Stand der Technik einer Frequenz von 1,2 MHz aufmoduliert und über einen Verstärker 32 der Addierstufe 8 zugeführt. Die Frequenz von 1,2 MHz liegt in einer Lücke zwischen den Chrominanz- und Luminanzbändern. Diese Lage hat den Vorteil, dass optimale Kopf-Band-Empfindlichkeit genutzt wird und dass nur geringe Störungen im Luminanzband verursacht werden. Dieses in Fig. 1 oder 2 dargestellte Signalgemisch wird dann auf den Schrägspuren eines Magnetbandes aufgezeichnet.

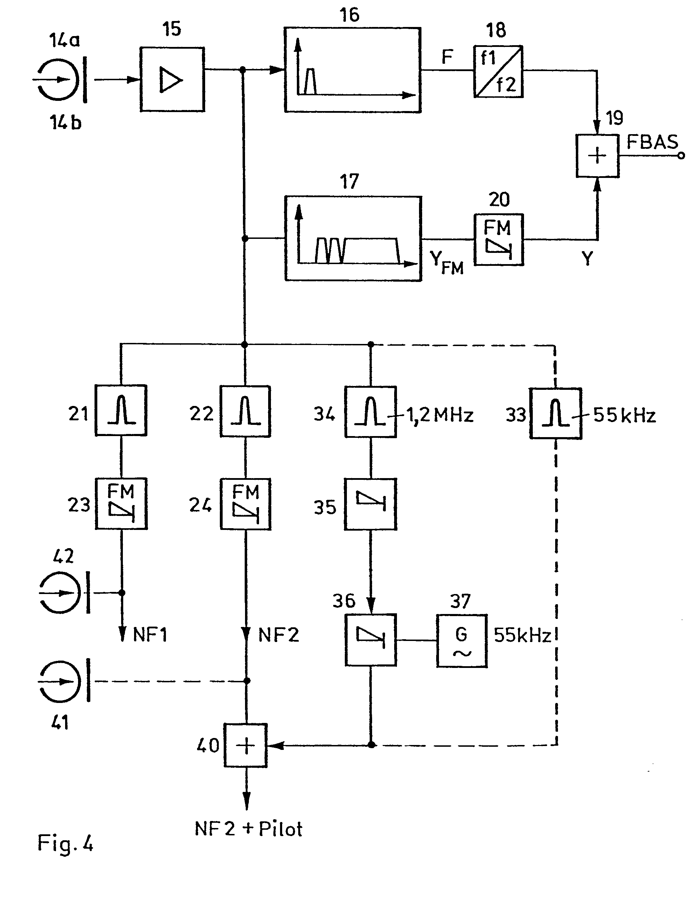

In Fig. 4 wird das vom Kopf 14 abgetastete Signalgemisch gemäss Fig. 1 in dem Verstärker 15 verstärkt und mit den Filtern 16, 17 in den modulierten Farbträger F und den modulierten Bildträger $Y_{FM}$ aufgespalten. Der Farbträger F wird in dem Frequenzumsetzer 18 wieder auf die Frequenz von 4,43 MHz umgesetzt und der Addierstufe 19 zugeführt. In dem Filter 17 werden die dem Luminanzsignal entsprechenden Frequenzbereiche ausgefiltert. In dem Frequenzdemodulator 20 wird das Leuchtdichtesignal Y gewonnen und der Addierstufe 19 zugeführt.

Die beiden modulierten Tonträger werden mit schmalbandigen Filtern 21, 22 selektiv aus dem Signalgemisch gemäss Fig. 1 herausgetrennt und entsprechend abgestimmten Frequenzdemodulatoren 23, 24 zugeführt. Die Demodulatoren liefern die beiden Tonsignale NF1 und NF2. Bei der Wiedergabe ist an den Ausgang des Kopfes 14 oder des Verstärkers 15 ein Filter 33 für 55 kHz angeschlossen, das den Pilotträger P oder die mit dem Pilotträger modulierte Frequenz aus dem FM-AM-Signalgemisch der Videoköpfe heraussiebt und dem Geräteausgang zuführt. Es kann auch ein Filter 34 für 1,2 MHz vorgesehen sein, das die 1,2 MHz einem Amplitudendemodulator 35 zuführt. Die Auswertung der im Pilotträger enthaltenen Information geschieht im angeschlossenen, nicht dargestellten Empfänger in üblicher, bekannter Weise. Die Information könnte aber auch, z.B. für Mess- oder Anzeigezwecke, im Videorecorder ausgewertet werden. In Fig. 4 ist die Pilotträgerfrequenz von 55 kHz (direkt oder aus 1,2 MHz rückgewonnen) verschiedenen Ausgängen des Verstärkers 15 zugeordnet. Dabei kann, wie in Fig. 4 gezeigt, die aus den 1,2 MHz rückgewonnene Modulation des Pilotträgers erneut in einem Modulator 36 einem Träger von 55 kHz aufmoduliert werden, der in einem Oszillator 37 gewonnen wird.

Bei einer weiteren Abwandlung der Fig. 3 wird der Pilotträger aus dem Signal NF2 durch ein Filter 38 herausgesiebt und in einem Demodulator 39 demoduliert. Das Demodulationsergebnis (0 Hz, 117 Hz oder 274 Hz) wird in dem Modulator 31 dem Träger von z.B. 1,2 MHz aufmoduliert und dem Verstärker 32 zugeführt. Das hat den Vorteil, dass eine Modulation des Pilotträgers mit 0 Hz, 170 Hz oder 240 Hz im Spektrum nur geringe Bandbreite benötigt. Die Ausgangssignale der Bausteine 33 oder 36 werden zusammen mit dem Tonsignal NF2 einer Addierstufe 40 zugeführt, wenn die anzuschliessenden Empfänger auf eine Sendenorm eingerichtet sind, bei der der Pilotträger zusammen mit dem Signal NF2 übertragen wird. Der Pilotträger ist in den Beispielen amplitudenmoduliert, da die zur Zeit vorliegenden Sendenormvorschläge eine solche Modulation vorsehen. Es ist aber auch möglich, andere Modulationsarten zu verwenden. Es ist ferner möglich, statt der beiden Tonträger nur einen Tonträger vorzusehen und diesen entsprechend zu modulieren. Während bei den beschriebenen Schaltungen beide Tonträger auch bei Monobetrieb übertragen werden, würde bei dem Einträger-Betrieb bei Mono die Zusatzmodulation einschliesslich der Pilotinformation entfallen.

Die Erfindung ist nicht darauf beschränkt, dass die Tonsignale zusammen mit den Videosignalen aufgezeichnet werden. In den Fig. 3 und 4 sind feststehende Köpfe 41 und 42 dargestellt, die zur Aufzeichnung der NF-Signale 1 und 2 direkt in zwei Spuren dienen, die parallel zur Kante des Bandes verlaufen. Lediglich der Pilotträger muss der Addierstufe 8 zugeführt werden. Die Erfindung ist auch nicht darauf beschränkt, dass die Tonträger 1 und 2 innerhalb des Videosignalbandes übertragen werden.

## Patentansprüche

1. Videorecorder, bei dem ein Bildträger mit den Videosignalen frequenzmoduliert und ein oder mehrere Tonträger (1, 2) mit monophonen, stereophonen oder mehrsprachigen Tonsignalen moduliert sind und bei dem ein modulierter Pilotträger (P) vorgesehen ist, dessen Modulation eine Information beinhaltet, ob der Tonträger mit monophonen, stereophonen oder mehrsprachigen Tonsignalen moduliert ist, dadurch gekennzeichnet, dass der modulierte Pilotträger (P) zusammen mit den Videosignalen frequenzverschachtelt aufgezeichnet ist.

2. Videorecorder nach Anspruch 1, dadurch gekennzeichnet, dass die Frequenz des Pilotträgers so gewählt ist, dass sie unterhalb des von dem mit Videosignalen frequenzmodulierten Bildträgers eingenommenen Frequenzbandes liegt, insbesondere mit 55 kHz und in den Videospuren aufgezeichnet ist.

3. Videorecorder nach Anspruch 2, dadurch gekennzeichnet, dass die Frequenz des Pilotträgers so gewählt ist, dass sie unterhalb der FM-Modulationsbänder des Videosignales und oberhalb des von den umgesetzten Chrominanzbändern des Videosignales eingenommenen Frequenzbereichs liegt, insbesondere mit 1,2 MHz in den Videospuren aufgezeichnet ist.

4. Videorecorder nach Anspruch 3, dadurch gekennzeichnet, dass bei der Aufzeichnung der empfangene, modulierte Pilotträger (P) demoduliert (39) und mit dem Demodulationsergbnis ein örtlich erzeugter Träger (1,2 MHz) moduliert wird.

5. Videorecorder nach Anspruch 3, dadurch gekennzeichnet, dass bei der Wiedergabe der modulierte Pilotträger (P) demoduliert (35) und mit dem Demodulationsergebnis ein örtlich (37) erzeugter Träger (55 kHz) moduliert (36) wird, der mit einem der modulierten Tonträger (NF2) addiert (40) wird.

## Claims

1. Video recorder in which a picture carrier is modulated in frequency with the video signals and one or more sound carriers (1, 2) are modulated with monophonic, stereophonic or multilingual sound signals and in which a modulated pilot carrier (P) is provided, the modulation of which contains an indication as to whether the sound carrier is modulated with monophonic, stereophonic or multilingual sound signals, characterized in that the modulated pilot carrier (P) is recorded interleaved in frequency with the video signals.

2. Video recorder according to Claim 1, characterized in that the frequency of the pilot carrier is so chosen that it lies under the frequency band of the picture carrier frequency-modulated with video signals, in particular is recorded at a frequency of 55 kHz and in the video tracks.

3. Video recorder according to Claim 2, characterized in that the frequency of the pilot carrier is so chosen that it lies under the FM-modulation bands of the video signal and above the frequency range occupied by the transposed chrominance bands of the video signal, in particular is recorded at a frequency of 1,2 MHz in the video tracks.

4. Video recorder according to Claim 3, characterized in that on recording the received, modulated pilot carrier (P) is demodulated (39) and a locally generated carrier (1,2 MHz) is modulated with the demodulation output.

5. Video recorder according to Claim 3, characterized in that on reproduction the modulated pilot carrier (P) is demodulated (35), and a locally (37) generated carrier (55 kHz) is modulated (36) with the demodulation output, which locally generated carrier is added (40) to one of the modulated sound carriers (NF2).

## Revendications

1. Magnétoscope dans lequel une porteuse image est modulée en fréquence par les signaux vidéo et une ou plusieurs porteuses son (1, 2) sont modulées par des signaux son monophoniques, stéréophoniques ou en plusieurs langues, et dans lequel une porteuse pilote (P) est prévue, dont la modulation contient une information sur la modulation de la porteuse son par des signaux son monophoniques, stéréophoniques ou en plusieurs langues, ledit magnétoscope étant caractérisé en ce que la porteuse pilote (P) modulée est enregistrée avec les signaux vidéo et entrelacement de fréquences.

2. Magnétoscope selon revendication 1, caractérisé en ce que la fréquence de la porteuse pilote est choisie de façon à se situer au-dessous de la bande de fréquence occupée par la porteuse image modulée en fréquence par des signaux vidéo, en particulier à 55 kHz, et enregistrée sur les pistes vidéo.

3. Magnétoscope selon revendication 2, caractérisé en ce que la fréquence de la porteuse pilote est choisie de façon à se situer au-dessous des bandes de modulation FM du signal vidéo et au-dessus de la bande de fréquences occupée par les bandes de chrominance transposées du signal vidéo, en particulier à 1,2 MHz, et enregistrée sur les pistes vidéo.

4. Magnétoscope selon revendication 3, caractérisé en ce que, pour l'enregistrement, la porteuse pilote (P) modulée reçue est démodulée (39), et le produit de démodulation module une porteuse locale (1,2 MHz).

5. Magnétoscope selon revendication 3, caractérisé en ce que la porteuse pilote modulée (P), lors de la lecture, est démodulée (35) et le produit de démodulation module (36) une porteuse (55 kHz) locale (37), qui est additionnée (40) à l'une des porteuses son modulées (NF2).

Fig.1

Fig.2

Fig.3

Fig. 4